(19) Europäisches Patentamt
European Patent Office
Office européen des brevets

(11) EP 1 059 316 B1

(12) # EUROPÄISCHE PATENTSCHRIFT

(45) Veröffentlichungstag und Bekanntmachung des Hinweises auf die Patenterteilung:
**15.11.2006 Patentblatt 2006/46**

(51) Int Cl.:
***C08F 230/02*** *(2006.01)* ***C08F 220/58*** *(2006.01)*
***C08F 226/04*** *(2006.01)* ***C09K 8/22*** *(2006.01)*
***E21B 33/13*** *(2006.01)*

(21) Anmeldenummer: **00110786.1**

(22) Anmeldetag: **20.05.2000**

(54) **Wasserlösliche Mischpolymere und ihre Verwendung für Exploration und Förderung von Erdöl und Erdgas**

Water-soluble copolymers and their use for the exploration and recuperation of oil and gas

Copolymères solubles dans eau et leur utilisation pour la prospection et récupération d'huile et de gaz

(84) Benannte Vertragsstaaten:
**DE FR GB IT NL**

(30) Priorität: **10.06.1999 DE 19926355**

(43) Veröffentlichungstag der Anmeldung:
**13.12.2000 Patentblatt 2000/50**

(73) Patentinhaber: **Clariant Produkte (Deutschland) GmbH**
**65929 Frankfurt am Main (DE)**

(72) Erfinder:
- **Oswald, Reinhard J.,DI.**
  **1180 Wien (AT)**
- **Morschhäuser, Roman, Dr.**
  **55122 mainz (DE)**
- **Heier, Karl Heinz, Dr.**
  **60598 Frankfurt am Main (DE)**
- **Tardi, Aranka**
  **63543 Neuberg (DE)**
- **Tonhauser, Juergen**
  **65375 Oestrich-Winkel (DE)**
- **Kayser, Christoph**
  **55127 Mainz (DE)**
- **Patterson, Dan**
  **Huntersville, NC 28078 (US)**

(56) Entgegenhaltungen:
**US-A- 5 032 295** **US-A- 5 379 841**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft wasserlösliche Mischpolymere, enthaltend Struktureinheiten abgeleitet aus Acrylamido-N-Methylenpropenylsulfonaten (AMPS), Vinylphosphonsäure und -salze (VPS) und kationischen Allyl- oder Vinylverbindungen, wie Diallyldimethylammoniumchlorid (DADMAC), sowie deren Verwendung als Additiv bei Tiefbohrungen, Tiefbohrzementierungen Komplettierungs- und Aufwältigungsflüssigkeiten sowie zur Reduzierung der Permeabilität des Wassers im sondennahen Bereich Erdöl bzw. Erdgas und Wasser führender Horizonte.

Im Bereich der Tiefbohrtechnik erfüllen Polymere in wasserbasischen Bohrspülungen unterschiedliche Aufgaben. So führen sie zu einer Reduzierung des Wasserverlustes vor allem beim Durchbohren von durchlässigen Formationen durch Aufbau einer dünnen Filterschicht, welche zu einer Abdichtung des Bohrloches führt. Außerdem halten sie das entstehende Bohrklein durch Dispergierung in der Schwebe und helfen damit u. a. das Bohrklein zu Tage zu fördern. Durch den Einsatz von polymeren Additiven werden außerdem die rheologischen Eigenschaften der Bohrspülungen verändert, insbesondere kommt es zu einer Erhöhung der Viskosität und Fließgrenze. Speziell fluid-loss-Additive für Tiefbohrungen sollten eine hohe Temperaturbeständigkeit und eine geringe Störanfälligkeit in Bezug auf stark saline Bedingungen insbesondere in bezug auf mehrwertige Kationen aufweisen und gleichzeitig die rheologischen Eigenschaften so wenig wie möglich beeinflussen, da es sonst bei Einstellung von geringen Wasserverlustwerten zu einer unerwünschten Erhöhung der plastischen Viskosität und Fließgrenze kommt.

Nachdem eine bestimmte Sektion abgebohrt ist, werden Futterrohre in das Bohrloch eingebracht. Anschließend müssen die Futterrohre fixiert, d. h. in den Ringraum mit dem Gebirge muß ein Zementschlamm eingepumpt werden, der mit hohen Festigkeiten aushärtet. Der sich bildende Zementstein muß undurchlässig für Gase und Flüssigkeiten sein, damit kein Gas und/oder Öl aus der Trägerformation in andere Formationen oder zur Oberfläche fließen kann. An den zu verpumpenden Zementschlamm werden sehr hohe Anforderungen gestellt. Es soll gut pumpbar sein, d. h. möglichst niedrig viskos und trotzdem keine Entmischung zeigen. Die Wasserabgabe soll im porösen Gebirge niedrig sein, damit der Pumpdruck infolge Ringraumverengung durch dickere Filterkuchen an der Bohrlochwand nicht zu stark ansteigt, was zum Aufreißen des Gebirges führen kann. Gibt der Zementschlamm zu viel Wasser ab, dann bindet er nicht voll ab und wird für Gas und Öl durchlässig. Schließlich muß der sich bildende Zementmantel im Ringraum möglichst schnell bestimmte Festigkeiten erreichen und beim Abbinden darf keine Schrumpfung auftreten, die zu Fließkanälen für Gas, Öl und Wasser führt.

Eine optimale Formulierung der Zementschlammeigenschaften ist nur durch Additive möglich.

Man unterscheidet 3 wesentliche Additivgruppen:

1. Verzögerer, welche die Abbindezeit erhöhen, damit der Zementschlamm für die volle Verpumpungsphase, die bei sehr tiefen Bohrungen mehrere Stunden beträgt, ausreichend flüssig bleibt. Die bekanntesten Produkte dieses Typs sind Lignosulfonate und Carboxymethylhydroxyethylcellulosen.

2. Dispergiermittel, welche die Zementschlämme homogen dispergieren und die Viskosität herabsetzen, was zu deren besseren Verpumpung führt. Als solche Produkte werden in US-3 465 825 Kondensationsprodukte aus Mononaphthalinsulfonaten und Formaldehyd und in US-4 053 323 N-sulfoalkylsubstituierte Acrylamide beschrieben. Auch die Lignosulfonate und Carboxymethylhydroxyethylcelluloseether haben neben der verzögernden eine dispergierende Wirkung auf Zementschlämme.

3. Wasserverlustreduzierer, welche die Wasserabgabe der Zementschlämme an poröse Formationen während der Verpumpung der Zementschlämme in den Ringraum zwischen Futterrohr und Bohrlochwand reduzieren. Die bekanntesten Produkte dieses Typs sind vollsynthetische Mischpolymerisate aus Acrylat/Acrylamid gemäß DE-B-28 30 528 und Blockpolymerisate aus Vinylpyrrolidon und Acrylamid gemäß GB-B-14 73 767 und die halbsynthetischen Carboxymethylhydroxyethyl- sowie Hydroxyethylcelluloseether.

Die Wasserverlustreduzierer sind von besonderer Bedeutung, da pumpbare Zementschlämme, die nur aus Zement und Wasser bestehen, hohe Volumina Wasser abgeben, wenn sie bei der Bohrlochzementation an porösen Gesteinsschichten vorbeifließen. Das alkalische Wasser bringt in den Formationen Tone zum Quellen und bildet mit $CO_2$ aus dem Erdgas oder Erdöl Niederschläge von Calciumcarbonat. Beide Effekte mindern die Permeabilität der Lagerstätten und reduzieren die späteren Produktionsraten. Der Übertage für die jeweilige Zementation optimal eingestellte Zement erfährt durch die Wasserabgabe eine schwer kalkulierbare, den Pumpvorgang erschwerende Viskositätserhöhung. Die Wasserabgabe an poröse Formationen kann zu einer inhomogenen Zementmasse führen, welche nicht homogen erstarrt und für Gase, für flüssige Kohlenwasserstoffe und Wässer durchlässig ist. Dies kann zum Entweichen von Erdgas oder Erdöl durch den mit porösen Zement gefüllten Ringraum in andere Formationen und in Extremfällen bis Übertage führen. Weiterhin können aggressive saline Wässer und Gase durch den porösen Zement auf die Futterrohre wirken und diese korrodieren.

Zur Gewährleistung einer technisch einwandfreien Bohrlochzementation ist die Herabsetzung des Wasserverlustes der eingesetzten Zementschlämme notwendig. Der Wasserverlust wird dabei vergleichend mit einer Filterpresse nach API Code 29 gemessen. Dabei ist die Filterfläche 45,8 $\pm$ 0,7 $cm^2$, der Überdruck 7 $\pm$ 0,7 atü und die Filtrationszeit 30 Minuten. In letzter Zeit werden immer häufiger auch Messungen des Wasserverlustes mit der Hochtemperatur- und Hochdruck-Filterpresse (Baroid Nr. 387) durchgeführt. Man filtert normalerweise mit einem Differenzdruck von 35 bar und gleicht die Temperatur der in der Praxis auftretenden an.

Die verbreitetste Anwendung zur Reduktion des Wasserverlustes von Zementschlämmen haben bisher die halbsynthetischen Celluloseether des Typs Hydroxyethylcellulose und teilweise auch Carboxymethylhydroxyethylcelluloseether gefunden. Ihr sinnvoller Einsatz findet seine Grenzen durch die Temperaturen, denen die Zementschlämme ausgesetzt werden. Die Wirkung fällt schon über 100°C stark ab und läßt sich dann auch durch höhere Einsatzmengen nicht mehr ausgleichen. Vollsynthetische Mischpolymere, bestehend aus Acrylamid und Acrylsäure oder Vinylpyrrolidon, haben sich in tieferen Bohrungen mit höheren Sohlentemperaturen nicht durchsetzen können. Sie zeigen, besonders wenn saline Wässer zur Formulierung von Zementschlämmen eingesetzt werden, eine sehr mäßige Wirkung, die bei höheren Temperaturen weiter abfällt. Saline Wässer sind bei Bohrungen auf dem Meer üblich und bei Zementationen in Salzschichten notwendig. Vollends versagen diese Produkte, wenn als Abbindebeschleuniger $CaCl_2$ eingesetzt wird. Der Stand der Technik zeigt, daß gegenwärtig eine Lücke bei Produkten zur Reduktion des Wasserverlustes von Zementschlämmen für Tiefbohrungen besteht, besonders wenn die Zementschlämme Temperaturen von über 100°C ausgesetzt und mit salinen Wässern formuliert werden.

Teilweise haben die Additive mehr als eine Funktion. Dispergatoren wie Lignosulfonate und Polymethylennaphthalinsulfonate verzögern die Abbindung und wirken leicht reduzierend auf den Wasserverlust. Manche Wasserverlustreduzierer verzögern die Abbindung und erhöhen drastisch die Viskosität.

Die ersten gut wirksamen Wasserverlustreduzierer, die auch heute noch verwendet werden, sind Hydroxyethyl- und Carboxymethylhydroxiethylcellulose. Hydroxyethylcellulose hebt die Viskosität an und verzögert etwas die Abbindung. Carboxymethylhydroxyethylcellulose verzögert stärker, was aber durch Beschleuniger ausgeglichen werden kann. Mit steigender Temperatur läßt die Wirkung merklich nach. In der Folge wurden viele verschiedene vollsynthetische temperaturstabilere Polymere vorgeschlagen und sind in Anwendung.

US-3 994 852 beschreibt z. B. Polyvinylpyrrolidonpolyacrylamid Polymere, US-3 943 996 Methacrylamidopropenyltrimethylammoniumchlorid Copolymere. US-4 015 991 hydrolysierte Acrylamid-Acrylamidomethylenpropenylsulfonat Copolymere. US-4 340 525 Acrylamid, Natriumacrylat und Natriumvinylsulfonat Terpolymere, US-4 413 681 Reaktionsprodukte aus Polyamin und hochmolekularen sulfonierten Polymeren, US-4 602 685 Dimethyldiallylammoniumchlorid Acrylsäure Copolymere, EP-A-0 192 447 Dimethylacrylamid Acrylamidomethylenpropenylsulfonat Copolymere, US-4 683 953 Methacrylamidopropylentrimethylammoniumchlorid, Styrolsulfonat und Acrylamid Terpolymere, US-4 742 094 Reaktionsprodukte bestehend aus Polyethylenimin und sulfonierten organischen Verbindungen, EP-A-0 118 332 verseifte Terpolymere des Typs Vinylsulfonat, Acrylamid, Vinylamid und EP-A-0 116 671 Acrylamidomethylen-propenylsulfonat, Acrylamid (teilverseift) und Vinylamid Terpolymere, die in Zementschlämmen zur Kontrolle des Wasserverlustes eingesetzt werden.

Die Vielzahl der entwickelten Verbindungen macht deutlich, daß es stets problematisch ist, einen optimalen Zementschlamm zu formulieren. Bei durch den Typ der Zementation vorgegebenen Einzelparametern müssen die anderen Eigenschaften mit Additiven auf akzeptable Werte eingestellt werden. Die hohe Zahl der entwickelten Verbindungen für die Reduzierung des Wasserverlustes zeigt an, wie problematisch es meist ist, eine geforderte Wasserabgabe einzustellen, ohne die Viskosität wesentlich zu erhöhen, die Abbindezeit gemäß Anforderung einzustellen und die Sedimentation zu minimieren. Wasserverlustreduzierende Polymere erhöhen mehr oder weniger stark die Viskosität der Zementschlämme, welche zumeist eine hohe Dichte besitzen.

Für eine gute Verpumpbarkeit der Zementschlämme muß die Viskosität niedrig gehalten werden. Es soll eine Pumprate möglich sein, die eine turbulente Strömung ermöglicht. Nur unter diesen Bedingungen findet eine vollständige Verdrängung der Spülung statt. Dies ist Voraussetzung für eine gute Zementation. Bei geneigten Bohrungen läßt sich die Spülung nur durch eine starke turbulente Strömung gut verdrängen.

Neben der Verwendung als Hilfsmittel zur Formulierung der Zementschlämme finden wasserlösliche Copolymere auch Anwendung beim sog. water shut-off. Dabei handelt es sich um die Verminderung der Permeabilität des Wassers im sondennahen Bereich Erdöl bzw. Erdgas und Wasser führender Horizonte. Die Verwendung von water shut-off-Polymeren führt daher zur Verringerung oder Einstellung von Wasserzuflüssen zu einer Produktionsbohrung.

Oft existiert Wasser als Salzlösung in derselben Formation wie Erdöl oder Erdgas. Die Gewinnung von Erdöl oder von Erdgas bringt also die Gewinnung von Wasser in einer solchen Menge mit sich, daß sie beträchtliche Probleme aufwirft. Sie verursacht direkt oder indirekt Ablagerung von Salzen in der Nachbarschaft der Bohrung oder in der Bohrung selbst, sie vergrößert beträchtlich die Korrosion aller Metallteile untertage oder übertage, sie vergrößert ohne Nutzen die Mengen der gepumpten, übergeführten und gelagerten Flüssigkeiten und sie schafft mit dem Öl Emulsionen, die schwierig übertage zu brechen sind und die untertage in den Hohlräumen der Formation Blockierungen bilden.

Gemäß dem Stand der Technik sind zahlreiche Verfahren vorgeschlagen und ausgeübt worden, die dazu

bestimmt sind, die Wasserzuflüsse in die Bohrungen zur Gewinnung von Erdöl oder Erdgas zu verringern. Sie bestehen oft darin, in der Formation zwischen dem Wasser und der Bohrung oder zwischen dem Wasser und dem Erdöl oder Erdgas eine undurchdringliche Sperre einzubringen. Die gewöhnlich eingebrachten Mittel blockieren fast ebenso viel Erdöl oder Erdgas wie Wasser. Die Bestandteile dieser Sperrung können sein: Zement, Harze, Suspensionen von festen Teilen, Paraffine oder wasserlösliche Polymere, die durch Einbringen von sogenannten Vernetzern (cross-linker) in der Lagerstätte vernetzt werden.

Oft verwendet man Polymere, die in Lösung in das poröse Milieu eingebracht werden, an der Oberfläche des Feststoffes adsorbiert werden und in den Porenraum hineinragen, so daß sie sich dafür eignen, die Wasserzuflüsse durch Reibung zu verringern. Im Gegensatz dazu passieren die nicht wäßrigen Fluide, wie Erdöl oder vor allem Erdgas die adsorbierten Makromoleküle, die nun ein vernachlässigbares Volumen an der Wand einnehmen und so den Durchgang vollständig freilassen.

Aus US-4 095 651 ist die Verwendung von hydrolysierten Polyacrylamiden bekannt. Es hat sich jedoch gezeigt, daß dieser Polymertyp hauptsächlich gegenüber Wasser mit geringem Salzgehalt wirksam ist und durch das Wasser mit höherem Salzgehalt abgebaut wird. Bei höheren Temperaturen neigen diese Polymeren in Gegenwart von mehrwertigen Ionen zur Bildung von Niederschlägen, die die Poren der Gesteinsformation verstopfen können.

Aus US-4 718 491 ist die Verwendung von Polysacchariden bekannt. Diese Verbindungen, die schlecht in den Porenraum injizierbar sind, bewirken zwar eine Verzögerung oder Verminderung des Wasserzuflusses, lassen aber nur einen unvollständigen Abbau der vorhandenen Lagerstätten zu, bzw. Verlieren bei höheren Temperaturen ihre Wirkung.

Aus US-4 842 071 ist die Verwendung von nicht-hydrolysierten Acrylamidpolymeren oder -copolymeren bekannt, die durch nachträgliches Einbringen einer wäßrig-basischen Lösung hydrolysiert werden. Dieses Verfahren besitzt Nachteile hinsichtlich eines zusätzlichen Arbeitsaufwandes durch das Einbringen einer weiteren Lösung, sowie durch die Problematik der Erreichbarkeit der injizierten Polymerlösung durch das Nachlegen der basischen Lösung und im Hinblick auf eine erhöhte Korrosionsanfälligkeit der eingesetzten Geräte. Zudem ist die Wirksamkeit der Polymerlösung nur bei erfolgter Umsetzung mit der wäßrig-basischen Lösung gegeben, wobei der Grad der Wirksamkeit durch den Umsetzungsgrad bestimmt wird.

US-5 379 841 offenbart gemäß Anspruch 1 ein Copolymer, welches 5 - 90 Gew.-% Struktureinheiten einer Acrylamidosulfonsäure und 5 - 95 Gew.-% eines n-Vinylamids umfaßt. Das Copolymer kann darüber hinaus auch Struktureinheiten der Vinylphosphonsäure umfassen. Das Dokument offenbart jedoch nicht eine Ausführungsform, in der eine Acrylamidosulfonsäure, Vinylphosphonsäure und Diallyldimethylammoniumchlorid gleichzeitig in den hier beanspruchten Mengenverhältnissen vorhanden wäre.

Die Aufgabe der Erfindung ist es, Stoffe bereitzustellen, die sowohl in der Exploration, d. h. bei Bohrspülung und Zementation, als auch bei Produktionsbohrungen einsetzbar sind. Sie sollen also wirksame Wasserverlustreduzierer sein, und sich zum water shut-off eignen.

Es wurde nun überraschend gefunden, daß Mischpolymere enthaltend Struktureinheiten von Acrylamido-N-Methylenpropenylsulfonaten, Vinylphosphonsäure oder deren Salze und einem kationischen Comonomeren es ermöglichen, Zementschlämme mit niedrigem Wasserverlust zu formulieren. Diese Additive weisen daneben hervorragende Eigenschaften als Bohrspülung auf. Außerdem sind sie dazu in der Lage, selektiv die Permeabilität des Wassers in Erdgas bzw. Erdöl und Wasser führenden Horizonten soweit zu verringern, daß sie zum water shut-off geeignet sind.

Gegenstand der Erfindung sind Mischpolymere, enthaltend

A) 5-95 Gew.-% Struktureinheiten, die sich von Verbindungen der Formel 1 ableiten,

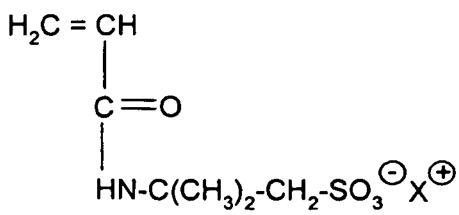

(1)

B) 1 bis 40 Gew.-% Struktureinheiten, die sich von Verbindungen der Formel 2 ableiten, und

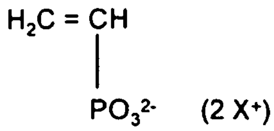

(2)

und

C1) 1 bis 50 Gew.-% Struktureinheiten, die sich von Verbindungen der Formel 3 ableiten,

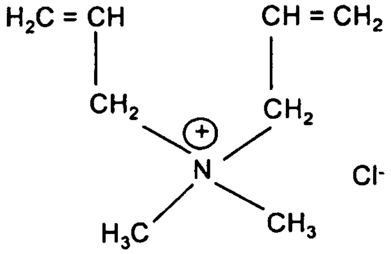

(3)

Als Kationen X sind ein- und zweiwertige Metallkationen wie etwa $Na^+$, $K^+$, $Mg^{2+}$, $Ca^{2+}$ oder auch $NH_4^+$ geeignet.

Die erfindungsgemäßen Mischpolymere enthalten Struktureinheiten A, B und C1. In einer bevorzugten Ausführungsform der Erfindung enthalten die Mischpolymere mindestens 2 Gew.-%, insbesondere 5 bis 20, speziell 5 bis 15 Gew.-% Struktureinheiten, abgeleitet von Verbindungen der Formel (5)

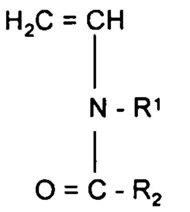

(5)

Hierin bedeuten $R^1$ und $R^2$ unabhängig voneinander Wasserstoff oder $C_1$-$C_4$-Alkyl, $R^1$ und $R^2$ können auch miteinander einen Ring bilden. Bilden $R^1$ und $R^2$ einen Ring, so bedeuten $R^1$ und $R^2$ zusammen $-(CH_2)_{n-}$, wobei n = 3, 4 oder 5 ist. In besonders bevorzugten Ausführungsformen werden Verbindungen der Formel (5) verwendet, in denen $R^1 = R^2 = H$, $R^1 = R^2 = CH_3$, $R^1 = CH_3$ und $R^2 = H$ ist, oder in denen $R^1$ und $R^2$ einen Ring bilden, wobei n = 3 oder 4 ist.

In einer weiteren bevorzugten Ausführungsform der Erfindung enthalten die Mischpolymere 1 bis 80 Gew.-%, insbesondere 10 bis 60 Gew.-% Struktureinheiten, die sich von Acrylamid oder von der Acrylsäure ableiten. Es können auch Mischungen beider Struktureinheiten vorhanden sein, dann gilt die mengenmäßige Begrenzung für die Summe dieser Struktureinheiten.

In einer weiteren bevorzugten Ausführungsform beträgt der Anteil von Struktureinheiten abgeleitet aus Verbindungen der Formel 1 am Copolymeren von 40 bis 90, insbesondere 45 bis 80 Gew.-%. Der Anteil von Struktureinheiten abgeleitet aus Verbindungen der Formel 2 liegt vorzugsweise bei 1 bis 10 Gew.-%. Der Anteil von Struktureinheiten abgeleitet aus Verbindungen der Formel 3 liegt vorzugsweise bei 1 bis 30 Gew.-%.

Die Reihenfolge der Monomereinheiten im Mischpolymeren ist beliebig. Es kann sich sowohl um statistische Polymere als auch um Blockpolymere handeln.

Die Molekulargewichte (Zahlenmittel) der erfindungsgemäßen Mischpolymere betragen vorzugsweise 50.000 bis 3.000.000, insbesondere werden Produkte von 200.000 bis 1.000.000 eingesetzt.

Als Indikator für das Molekulargewicht dienen die relative Viskosität bzw. der k-Wert. Zur Bestimmung des k-Werts wird das Copolymer in einer bestimmten Konzentration (meist 0,5 %) gelöst und mittels Ubbelohde-Kapillar-Viskosimeter die Ausflußzeit bei 25°C ermittelt. Dieser Wert ergibt die absolute Viskosität der Lösung ($\eta_c$). Die absolute Viskosität des Lösemittels ist $\eta_o$. Das Verhältnis beider absoluten Viskositäten ergibt die relative Viskosität

$$z = \frac{\eta_c}{\eta_o}$$

aus den relativen Viskositäten als Funktion der Konzentration kann der k-Wert mittels folgender Gleichung ermittelt werden:

$$\text{Lg}\, z = \left( \frac{75 \cdot k^2}{1 + 1.5\, kc} + k \right) c$$

Die erfindungsgemäßen Mischpolymerisate sind durch Copolymerisation von Verbindungen der Formeln 1, 2 und 3 oder 4, sowie gegebenenfalls 5, Acrylsäure oder Acrylamid in den angegebenen Mengenverhältnissen herstellbar.

Die erfindungsgemäßen Mischpolymerisate können nach den üblichen Polymerisationsverfahren, wie Lösungspolymerisation, Substanzpolymerisation, Emulsionspolymeristion, inverse Emulsionspolymerisation, Fällungspolymerisation, Gelpolymerisation hergestellt werden.

Vorzugsweise wird die Polymerisation als Lösungspolymerisation in Wasser und als Fällungspolymerisation ausgeführt.

Bei der Durchführung der Copolymerisation in einem mit Wasser mischbaren organischen Lösungsmittel arbeitet man unter den Bedingungen der Fällungspolymerisation. Hierbei fällt das Mischpolymerisat direkt in fester Form an und kann durch Abdestillieren des Lösungsmittels oder Absaugen und Trocknen isoliert werden.

Als wassermischbare organische Lösungsmittel, die hier geeignet sind, kommen insbesondere wasserlösliche Alkanole, nämlich solche mit 1 bis 4 C-Atomen, wie Methanol, Ethanol, Propanol, Isopropanol, n-, sec- und iso-Butanol, vorzugsweise aber tert. Butanol, in Betracht.

Der Wassergehalt der hierbei als Lösungsmittel eingesetzten niederen Alkanole sollte 6 Gew.-% nicht überschreiten, da sonst eine Klumpenbildung bei der Polymerisation auftreten kann. Vorzugsweise wird bei einem Wassergehalt von 0-3 Gew.-% gearbeitet.

Die Menge des einzusetzenden Lösungsmittels richtet sich bis zu einem gewissen Grad nach der Art der eingesetzten Comonomeren.

In der Regel werden pro 100 g Gesamtmonomere 200 bis 1000 g des Lösungsmittels eingesetzt.

Bei der Durchführung der Polymerisation in umgekehrter Emulsion wird die wäßrige Monomerenlösung in bekannter Weise in einem mit Wasser nicht mischbaren organischen Lösungsmittel, wie Cyclohexan, Toluol, Xylol, Heptan oder hochsiedenden Benzinfraktionen unter Zusatz von 0,5 bis 8 Gew.-%, vorzugsweise 1 bis 4 Gew.-%, bekannter Emulgatoren vom W/O-Typ emulgiert und mit üblichen radikalbildenden Initiatoren polymerisiert. Bei diesem Verfahren werden wasserlösliche Monomere oder Mischungen davon in der Wärme zu hochmolekularen Copolymerisaten polymerisiert, indem man zunächst die Monomeren oder wäßrige Lösungen davon, unter Zusatz von Wasser-in-Öl-Emulgatoren in einem mit Wasser nicht mischbaren, die zusammenhängende Phase bildenden organischen Lösungsmittel emulgiert und diese Emulsion in Gegenwart von radikalischen Initiatoren erwärmt. Die einzusetzenden Comonomeren können als solche in dem mit Wasser nicht mischbaren organischen Lösungsmittel emulgiert werden, oder sie können in Form einer wäßrigen Lösung, die zwischen 100 und 5 Gew.-% Comonomere und 0 bis 95 Gew.-% Wasser enthält, eingesetzt werden, wobei die Zusammensetzung der wäßrigen Lösung eine Frage der Löslichkeit der Comonomeren in Wasser und der vorgesehenen Polymerisationstemperatur ist. Das Verhältnis zwischen Wasser und der Monomerenphase ist in weiten Grenzen variabel und liegt in der Regel bei 70 : 30 bis 30 : 70.

Um die Monomerenphase in dem mit Wasser nicht mischbaren organischen Lösungsmittel zu einer Wasser-in-Öl-Emulsion zu emulgieren, werden den Gemischen 0,1 bis 10 Gewichtsprozent, bezogen auf die Ölphase eines Wasser-in-Öl-Emulgators, zugesetzt. Vorzugsweise werden solche Emulgatoren verwendet, die einen relativ niedrigen HLB-Wert aufweisen. Als Ölphase kann im Prinzip jede inerte wasserunlösliche Flüssigkeit, d. h. im Prinzip jedes hydrophobe organische Lösungsmittel, eingesetzt werden. Im allgemeinen verwendet man Kohlenwasserstoffe, deren Siedepunkt im Bereich von 120 bis 350°C liegt. Diese Kohlenwasserstoffe können gesättigte, lineare oder verzweigte ParaffinKohlenwasserstoffe, wie sie in Erdölfraktionen vorwiegend vorliegen, sein, wobei diese auch die üblichen Anteile von Naphthenkohlenwasserstoffen enthalten können. Es können aber auch aromatische Kohlenwasserstoffe, wie beispielsweise Toluol oder Xylol, sowie die Gemische der oben genannten Kohlenwasserstoffe als Ölphase eingesetzt

werden. Vorzugsweise verwendet man ein Gemisch aus gesättigten Normal- und Iso-Paraffinkohlenwasserstoffen, das bis zu 20 Gew.-% Naphthene enthält.

Copolymerisate mit besonders hohem Polymerisationsgrad in den Grundketten werden erhalten, wenn man die Polymerisation in wäßriger Lösung nach dem Verfahren der sogenannten Gelpolymerisation durchführt. Dabei werden 15 bis 60 %ige wäßrige Lösungen der Comonomeren mit bekannten geeigneten Katalysatoren ohne mechanische Durchmischung unter Ausnutzung des Trommsdorff-Norrisch-Effekts erhalten.

Durch Nacherhitzen der bei der Gelpolymerisation erhaltenen Polymerisatgele im Temperaturbereich von 50 bis 130°C, vorzugsweise 70 bis 100°C, können die Qualitätseigenschaften der Polymerisate noch verbessert werden.

Die auf diesem Wege hergestellten, in Form wäßriger Gallerten vorliegenden Mischpolymere können nach mechanischer Zerkleinerung mit geeigneten Apparaten direkt in Wasser gelöst werden und zum Einsatz gelangen. Sie können aber auch nach Entfernung des Wassers durch bekannte Trocknungsprozesse in fester Form erhalten und erst bei ihrer Verwendung wieder in Wasser aufgelöst werden.

Die Polymerisationsreaktion wird im Temperaturbereich zwischen -60 °C und 200 °C, bevorzugt zwischen 10 und 120 °C, durchgeführt, wobei sowohl unter Normaldruck als auch unter erhöhtem Druck gearbeitet werden kann. In der Regel wird die Polymerisation in einer Schutzgasatmosphäre, vorzugsweise unter Stickstoff, ausgeführt.

Zur Auslösung der Polymerisation können energiereiche elektromagnetische oder korpuskulare Strahlen oder die üblichen chemischen Polymerisationsinitiatoren herangezogen werden, z. B. organische Peroxide, wie Benzolperoxid, tert. Butylhydroperoxid, Methylethylketonperoxid, Cumolhydroperoxid, Azoverbindungen wie Azodiisobutyronitril oder 2'-Azo-bis-(2-amidinopropan)-dihydrochlorid sowie anorganische Peroxiverbindungen, wie $(NH_4)_2S_2O_8$ oder $K_2S_2O_8$ oder $H_2O_2$ gegebenenfalls in Kombination mit Reduktionsmitteln wie Natriumhydrogensulfit und Eisen-II-Sulfat oder Redoxsysteme, welche als reduzierende Komponente eine aliphatische und aromatische Sulfinsäure, wie Benzolsulfinsäure und Toluolsulfinsäure oder Derivate dieser Säuren enthalten, wie z. B. Mannichaddukte aus Sulfinsäure, Aldehyden und Amino-Verbindungen. Pro 100 g Gesamtmonomeren werden in der Regel 0,03 bis 2 g des Polymerisationsinitiators eingesetzt.

Es ist weiterhin bekannt, den Polymerisationsansätzen kleine Mengen von sogenannten Moderatoren zuzusetzen, die den Verlauf der Reaktion dadurch harmonisieren, daß sie das Reaktionsgeschwindigkeits-Zeitdiagramm abflachen. Sie führen damit zu einer Verbesserung der Reproduzierbarkeit der Reaktion und ermöglichen damit, einheitliche Produkte mit äußerst geringen Qualitätsabweichungen herzustellen. Beispiele für geeignete Moderatoren dieses Typs sind Nitrilo-tris-propionylamid oder Monoalkylamine, Dialkylamine oder Trialkylamine, wie z. B. Dibutylamin. Auch bei der Herstellung der erfindungsgemäßen Copolymerisate können solche Moderatoren mit Vorteil verwendet werden.

Weiterhin können den Polymerisationsansätzen sogenannte Regulatoren zugesetzt werden, das sind solche Verbindungen, die das Molekulargewicht der hergestellten Polymerisate beeinflussen. Brauchbare bekannte Regulatoren sind z. B. Alkohole, wie Methanol, Ethanol, Propanol, Isopropanol, n-Butanol, sec.-Butanol und Amylalkohole, Alkylmercaptane, wie z. B. Dodecylmercaptan und tert.-Dodecylmercaptan, Isooctylthioglycolat und einige Halogenverbindungen, wie z. B. Tetrachlorkohlenstoff, Chloroform und Methylenchlorid.

Die erfindungsgemäßen Copolymerisate sind hervorragend als Hilfsmittel bei Bohrspülungen geeignet. Sie zeigen dabei eine sehr gute Schutzkolloidwirkung sowohl bei hohen Temperaturen als auch bei hohen Elektrolytkonzentrationen und entsprechen im Hinblick auf Elektrolytstabilität und Alterungsstabilität mindestens dem Stand der Technik. Hinsichtlich der Preßwasser reduzierenden Wirkung und im rheologischen Verhalten nach dem Anmischen und nach Alterung über den gesamten Temperaturbereich von 130 bis über 200 °C sind sie den bisher aus US-3,629,101, US-4,048,077und US-4,309,523 bekannten Mischpolymeren erheblich überlegen.

Zur Formulierung von wäßrigen Bohrspülungen werden die erfindungsgemäßen Mischpolymerisate vorzugsweise in Konzentrationen von 0,5 bis 40 kg/$m^3$, insbesondere 3 bis 30 kg/$m^3$, eingesetzt. Die wäßrigen Bohrspülungen enthalten zur Viskositätserhöhung und Abdichtung durchbohrter Formationen weiterhin Bentonite. Zur Dichteerhöhung der Bohrschlämme werden Schwerspat, Kreide und Eisenoxide zugesetzt.

Bentonit, Schwerspat, Kreide und Eisenoxid können allein oder in den verschiedensten Mischungsverhältnissen den Bohrspülungen zugegeben werden, wobei die rheologischen Eigenschaften der Bohrschlämme erhalten bleiben müssen.

Werden die erfindungsgemäßen Mischpolymerisate zu üblichen Tiefbohrzementschlämmen, welche vorzugsweise 30 - 65 Gew.-%, insbesondere 35 - 55 Gew.-% Wasser, bezogen auf den eingesetzten trockenen Zement, enthalten, zugesetzt, so erhält man Zementschlämme mit erheblich verbesserten Fließ- und Abbindeeigenschaften und mit geringerem Wasserverlust.

Dabei werden die erfindungsgemäßen Polymerisate vorzugsweise in Mengen von 0,1 - 2,0 Gew.-%, bezogen auf den eingesetzten Zement, Zementschlämmen üblicher Zusammensetzung zugesetzt, die bezogen auf z. B. Tiefbohrzement "Class G" z. B. 44 Gew.-% Wasser, 0,1 - 2,0 Gew.-% eines handelsüblichen Dispergators für Tiefbohrzement sowie gegebenenfalls Verzögerer oder Beschleuniger und andere Additive enthalten. Je nach Anforderungen kann der Zementschlamm statt mit Wasser z. B. auch mit synthetischem Meerwasser oder mit NaCl-Lösungen unterschiedlicher

Dichte bis zur Sättigung angemischt werden.

Die Güte der so mit den erfindungsgemäßen Polymerisaten hergestellten Zementschlämme wird gemäß API spec 10 beurteilt. Es ergeben sich Zementschlämme mit vorteilhaft niedriger plastischer Viskosität, geringem Wasserverlust und gemäß den Anforderungen regulierbarer Abbindezeit in einem Temperaturbereich von 60 - 200°C.

Die erfindungsgemäßen Copolymerisate werden weiterhin bevorzugt zur Verringerung oder vollständigen Einstellung des Wasserflusses bei Bohrungen in Sandstein, Carbonatgestein oder Silikatgestein eingesetzt. Durch eine Modifizierung der eingesetzten Copolymere kann die Absorptionsfähigkeit des Polymers an den vorhandenen Gesteinstypus angepaßt werden. Durch eine sogenannte anionische Modifizierung der eingesetzten Polymere läßt sich die Absorption von carbonathaltigen Gesteinen verbessern. Eine anionische Modifizierung wird üblicherweise durch einen Anteil an Struktureinheiten der Formel (1) und insbesondere der Formel (2) in Polymeren erreicht. Durch eine sogenannte kationische Modifizierung der eingesetzten Polymeren läßt sich die Absorption an silikathaltigen Gesteinen verbessern. Eine kationische Modifizierung wird üblicherweise durch einen Anteil an Struktureinheiten der Formeln (3) oder (4) erreicht.

Die erfindungsgemäßen Copolymere enthalten sowohl Struktureinheiten der Formeln (1) und (2) als auch solche der Formeln (3) oder (4). Sie vermindert somit die relative Permeabilität des Wassers durch verbesserte Adsorption an carbonathaltigem Gestein und an silikathaltigen Gesteinen sowie an den häufig vorkommenden Mischformen.

Für Komplettierungs- und Aufwältigungsflüssigkeiten werden z. B. $CaCl_2$-(max. 1,40 g/$cm^3$), $CaBr_2$-(max. 1,71 g/$cm^3$) oder $CaCl_2$/$CaBr_2$- (max. 1,81 g/$cm^3$) Lösungen verwendet, die auch bei höheren Temperaturen einen niedrigen Wasserverlust aufweisen müssen.

Die Herstellung und Anwendung der erfindungsgemäßen Polymerisate wird durch die folgenden Beispiele veranschaulicht.

Methode 1 (Fällungspolymerisation)

In einem Polymerisationskolben von 2 l Inhalt, ausgestattet mit Rührer, Rückflußkühler, Tropftrichter, Gaseinleitungsrohr und elektrisch beheiztem Wasserbad werden 600 ml tert. Butanol vorgeleitet und darin 70 g AMPS unter Rühren suspendiert, dann werden 8,5 l $NH_3$-Gas eingeleitet und anschließend 11 g Acrylamid, 15 g N-Vinylformamid, 3,33 g DADMAC 60 %-ig und 3,1 g Vinylphosphonsäure 65 %-ig zugegeben. Unter Einleiten von Stickstoff wird mit dem elektrischen Wasserbad das Reaktionsgemisch auf 50 °C geheizt und 1,0 g Azoisobutyronitril zugesetzt. Nach einer Induktionszeit von ca. 2 Stunden setzt die Polymerisation ein, die Reaktionstemperatur steigt bis auf 70°C an und das Polymerisat fällt aus. Es wird noch 2 Stunden bei 80°C nachgeheizt, wobei eine dickflüssige Suspension entsteht. Das Polymer kann durch Absaugen und Trocknen unter Vakuum bei 50°C isoliert werden. Es kann jedoch auch das Lösungsmittel direkt unter vermindertem Druck aus dem Reaktionsgemisch abdestilliert werden. Man erhält das Polymer in Form eines weißen leichten Pulvers, das sich in Wasser gut löst.

Methode 2: (Polymerisation in wäßriger Lösung)

In einem Polymerisationskolben von 1 l Inhalt, ausgestattet mit Rührer, Rückflußkühler, Tropftrichter, Gaseinleitungsrohr und elektrisch beheiztem Wasserbad werden 121,4 ml entionisiertes Wasser und 1,6 g Vinylphosphonsäure 65 %ig vorgelegt, mit Stickstoff gespült und wäßrige Ammoniaklösung 22 %-ig zugegeben, bis ein pH-Wert von 7 - 7,5 erreicht ist. Diese Lösung wird dann auf 60°C erwärmt.

Man bereitet eine Monomer/Initiator-Lösung bestehend aus 290 g entionisiertem Wasser, 72,6 g AMPS, 29,1 g Acrylamid 50 %ig, 10,4 g N-Vinylformamid, 5,2 g DADMAC 60 %ig, 2,1 g Acrylsäure, 0,5 ml Isopropanol, 0,51 g 2,2'-azobis(2-amidiniopropane) dihydrochlorid und der zur Einstellung eines pH-Wertes von 7,0 - 7,5 benötigten Menge wässriger Ammoniaklösung 22% -ig.

10 % (ca. 45 ml) der Monomer/Initiator-Lösung werden in den Polymerisationskolben gegeben. Die Mischung wird bei 60°C gerührt, bis die Polymerisation anspringt (ca. 30 Min). Anschließend wird die restliche Monomer/Initiator-Lösung mit konstanter Dosierrate über einen Zeitraum von 2,5 Stunden zugegeben. Es wird noch 2 Std. nachgeheizt bei 80°C. Man erhält eine klare, hochviskose Lösung, welche direkt der Verwendung als Bohrspülzusatz oder als Zusatz zu Zementschlämmen zugeführt werden kann.

Methode 3: (Gelpolymerisation)

In einem Polymerisationskolben von 1 l Inhalt, ausgestattet mit Rührer, Rückflußkühler, Gaseinleitungsrohr, Thermofühler und pH-Meßgerät mit Einstab-Meßkette werden 160 ml entionisiertes Wasser, 42 g AMPS, 52 g Acrylamid, 3,15 g Vinylphosphonsäure 65 %ig, 6,7 g DADMAC 60 %ig vorgelegt und mit 19,4 g wäßriger Ammoniaklösung 22 %-ig ein pH-Wert von 7,2 eingestellt. Man kühlt auf 20°C ab, baut den Rührer aus und bläst mit Stickstoff den Luftsauerstoff aus. Danach gibt man 4 g einer 10 %igen Ammoniumpersulfat-Lösung zu und entfernt nach 10 Minuten das Gaseinleitungsrohr und stellt den Stickstoff-Strom ab. Die Reaktion springt sofort an. Nach Stehen über Nacht erhält man ein hochviskoses bis steifes, klares Gel.

Methode 4: (Inverse Emulsionspolymerisation)

In einem Polymerisationskolben von 1 l Inhalt, ausgestattet mit Rührer, Thermometer, Tropftrichter, Rückflußkühler und Gaseinleitungsrohr werden 179,5 g ®Isopar M (Gemisch verzweigter $C_8$-$C_{14}$- Paraffine, Esso) vorgelegt und darin 13,3 g Nonylphenol-ethylenoxidaddukt (®Arkopal N-100, Clariant GmbH) sowie 35,3 g Sorbitanmonooleat (®Span 80, Atlas Chemie GmbH) gelöst.

Separat wird die Monomer-Lösung bereitet Man legt 190 ml Wasser vor, löst darin 70g AMPS auf und stellt unter Eiskühlung durch Einleiten von Ammoniak-Gas den pH-Wert auf 7.5 - 8,5 ein. Anschließend werden 5,3 g Vinylphosphonsäure 65 % ig, 11,2 g DADMAC 60 % ig und 86,7 g Acrylamid zugegeben. Die Monomer-Lösung wird nun unter Rühren innerhalb von 5 Minuten der Ölphase zugemischt. Das Reaktionsgemisch wird danach unter Eiskühlung 3 Minuten mit dem Ultraturrax emulgiert.

Man gibt 2 ml einer 1 % igen Lösung von Cumolhydroperoxid in Ethylacetat zu, evakuiert den Polymerisationskolben anschließend 3 x auf weniger als 4 mbar, belüftet jeweils mit Stickstoff und leitet danach ständig Stickstoff ein. Man kühlt die Monomeremulsion auf 5 °C ab und hält ab jetzt konstant eine Rührgeschwindigkeit von 180 rpm ein.

Danach erfolgt die Zugabe von 100 ppm Thionylchlorid, worauf die Polymerisation in Kürze einsetzt, erkenntlich an einem Temperaturanstieg. Durch Kühlung hält man die Reaktionstemperatur auf 18- 20°C. Ist keine exotherme Reaktion mehr feststellbar, wird auf 50°C aufgeheizt und im Verlauf von 60 Minuten 10 g einer 1 gew.-% igen Lösung von Ammoniumpersulfat in Wasser zudosiert, anschließend wird noch 5 Std. bei 50°C nachgerührt. Nach Abkühlung auf 20°C werden zur besseren Invertierung 27,5 g Arkopal N-100 eingerührt. Man erhält so eine stabile Mikroemulsion, die direkt verwendet werden kann.

In der nachfolgenden Tabelle 1 sind die nach den oben beschriebenen Methoden hergestellten erfindungsgemäßen Copolymerisate und ihre bevorzugten Anwendungen zusammengefaßt. Die Zusammensetzungen verstehen sich in Gew.-%, sofern nichts anderes angegeben ist.

In der Tabelle 1 haben die Abkürzungen die folgenden Bedeutungen:

| | |
|---|---|
| AM: | Acrylamid |
| AMPS: | 2-Acrylamido-2-methyl-propansulfonsäure-(3) |
| VPS: | Vinylphosphonsäure |
| VF: | Vinylformamid |
| NVP: | N-Vinylpyrrolidon |
| DADMAC: | Diallyl - dimethyl - ammoniumchlorid |
| AMPT: | 1-N-Acrylamidopropyl-3-trimethylammonium Chlorid |

Bei den Anwendungen bedeuten:

| | |
|---|---|
| BS: | Bohrspülung |
| CW: | Komplettierungs- und Aufwältigungsflüssigkeiten |
| WA: | Wasserabsperrung |
| Z: | Tiefbohrzementation |

Tabelle 1

| Nr. | K-Wert | Monomerenzusammensetzung | | | | | | | | Anwendung | Bem. |
|---|---|---|---|---|---|---|---|---|---|---|---|
| | | AMPS | VPS | DADMAC | AMPT | VF | NVP | AM | Methode | | |
| 1 | 181 | 70 | 2 | 2 | 0 | 15 | 0 | 11 | 1 | BS, Z | erf. |
| 2 | 190 | 70 | 2 | 0 | 2 | 15 | 0 | 11 | 2 | BS, Z | Vergl. |
| 3 | 156 | 81 | 2 | 2 | 0 | 7,5 | 7,5 | 0 | 1 | BS | erf. |
| 4 | 208 | 70 | 1 | 3 | 0 | 10 | 2* | 14 | 2 | Z | erf. |
| 5 | 205 | 70 | 1 | 0 | 3 | 10 | 2* | 14 | 2 | Z | Vergl. |
| 6 | 202 | 80 | 1 | 3 | 0 | 10 | 2* | 4 | 2 | Z | erf. |
| 7 | 158 | 80 | 2 | 2 | 0 | 16 | 0 | 0 | 1 | BS | erf. |
| 8 | 160 | 80 | 2 | 2 | 0 | 0 | 16 | 0 | 1 | BS | erf. |
| 9 | 205 | 74 | 4 | 22 | 0 | 0 | 0 | 0 | 2 | Z, CW | erf. |
| 10 | 195 | 74 | 4 | 0 | 22 | 0 | 0 | 0 | 2 | Z, CW | Vergl. |
| 11 | > 250 | 42 | 2 | 4 | 0 | 0 | 0 | 52 | 3 | WA | erf. |
| 12 | > 250 | 42 | 2 | 0 | 4 | 0 | 0 | 52 | 3 | WA | Vergl. |
| 13 | 230 | 42 | 2 | 4 | 0 | 0 | 0 | 52 | 4 | WA, CW | erf. |
| 14 | 235 | 42 | 2 | 0 | 4 | 0 | 0 | 52 | 4 | WA, CW | Vergl. |
| 15 | 226 | 46 | 2 | 0 | 0 | 0 | 0 | 52 | 3,4 | WA | Vergl. |
| 16 | 178 | 65 | 0 | 0 | 0 | 20** | 0 | 15 | 1 | BS, Z | Vergl. |
| 17 | 154 | 75 | 0 | 10 | 0 | 7,5 | 7,5 | 0 | 2 | BS | Vergl. |

*: enthält Acrylsäure statt NVP;
**: enthält N-Vinyl N-Methylacetamid (VIMA) Statt VF

In den nachfolgenden Beispielen werden erfindungsgemäße Mischpolymerisate mit bekannten Mischpolymeren in einer mit Schwerspat beschwerten Meerwasser-Bohrspülung mit 3 % KCI und einem spezifischem Gewicht von 2,1 kg/l verglichen. Die Einsatzmenge betrug jeweils 2,5 Gew.-%.

Die Güte der Spülung und damit die Wirksamkeit der Additive wird nach folgenden Kriterien bewertet:

a) Fluid loss nach 30 Minuten in einer HTHP-Filterpresse bei 150°C und einem Druck von 500 psi (~35 bar) nach 16 h bzw. 66 h dynamische Alterung der Spülung im Rollerofen bei 130°C, 150°C, 170°C, 185°C und 200°C

b) Rheologie (scheinbare Viskosität [App. Visc.], Yield point [YP], Gelstärken nach 10 Sekunden [10''] und 10 Minuten [10']) gemessen im Fann-35 Rotationsviskosimeter nach dem Anmischen sowie noch 16 h bzw. 66 h dynamischer Alterung im Rollerofen bei 130, 150, 170, 185 und 200°C.

Für die Untersuchungen wurden folgende Additive verwendet:

A) Mischpolymerisat (erfindungsgemäß) bestehend aus 81 Gew.-% AMPS, 7,5 % N-Vinylformamid, 7,5 % N-Vinylpyrrolidon, 2 % Vinylphosphonsäure und 2 % Diallyl-dimethyl-ammoniumchlorid gemäß Beispiel 3

B) Mischpolymerisat bestehend aus 65 % AMPS, 20 % N-Vinyl-N-Methyl-acetamid und 15 % Acrylamid (Vergleichsbeispiel 16)

C) Mischpolymerisat bestehend aus 75 % AMPS, 7,5 % N-Vinylformamid, 7,5 % N-Vinylpyrrolidon und 10 % DADMAC (Vergleichsbeispiel 17)

Tabelle 2

| Mischpolymerisat | Alterung / h<br>Temp.(°C) | vor | 16<br>130 | 16<br>150 | 16<br>170 | 66<br>170 | 16<br>200 |
|---|---|---|---|---|---|---|---|
| A | Fluid loss (ml) | | 41 | 39 | 23 | 22 | 25 |
| | App. Visc. (cP) | 76 | 87 | 76 | 83 | 80 | 60 |
| | YP (lb/100 ft 2) | 28 | 33 | 32 | 23 | 9 | 7 |
| | 10" Geist. | 6 | 8 | 9 | 7 | 3,5 | 5 |
| | 10' Gelst. | 13 | 14 | 12 | 10 | 6 | 5 |
| B | Fluid loss (ml) | | 37 | 20 | 16 | 37 | >150 |
| | App. Visc. (cP) | 134 | 106 | 108 | 76 | 45 | 35 |
| | YP (lb/100 ft 2) | 66 | 46 | 31 | 11 | 11 | 12 |
| | 10" Gelst. | 35 | 19 | 6 | 4 | 5 | 20 |
| | 10' Gelst. | 82 | 29 | 14 | 5 | 14 | 36 |
| | | | | | | 16 h/<br>185 °C | |
| C | Fluid loss (ml) | | 42 | 51 | 80 | >150 | >150 |
| | App. Visc. (cP) | 74 | 83 | 73 | 60 | 48 | 33 |
| | YP (lb/100 ft 2) | 25 | 29 | 32 | 24 | 10 | 11 |
| | 10" Geist. | 6 | 9 | 10 | 12 | 18 | 23 |
| | 10' Geist. | 13 | 15 | 17 | 20 | 35 | 40 |

Die Prüfungsergebnisse zeigen die Überlegenheit des erfindungsgemäßen Polymerisates A gegenüber den bisherigen Stand der Technik repräsentierenden Polymerisaten B und C hinsichtlich der gleichmäßigen rheologischen Eigenschaften der Bohrspülung nach dem Anmischen und nach Alterung über den Temperaturbereich von 130 - 200°C und in Bezug auf den HTHP Preßwasserverlust.

Werden erfindungsgemäße Copolymerisate zu üblichen Tiefbohrzementschlämmen zugesetzt, so erhält man Produkte mit erheblich verbesserten Fließ- und Abbindeeigenschaften und mit geringerem Wasserverlust. Dabei werden die z.B. entweder gemäß Beispiel 1 oder Beispiel 4 hergestellten erfindungsgemäßen Polymerisate mit Einsatzmengen von 0,1 - 2,0 Gew.-%, bezogen auf den eingesetzten Zement, Zementschlämmen üblicher Zusammensetzung zugesetzt, die bezogen auf z.B. Tiefbohrzement "Class G" z.B 44 Gew % Wasser, 0,1 - 2,0 Gew.-% eines handelsüblichen Dispergators für Tiefbohrzement sowie ggfs Verzögerer oder Beschleuniger und andere Additive enthalten. Je nach Anforderungen kann der Zementschlamm statt mit Wasser z.B. auch mit synthetischem Meerwasser oder mit NaCl-Lösungen

unterschiedlicher Dichte bis zur Sättigung angemischt werden.

Die Güte der so mit den erfindungsgemäßen Polymerisaten hergestellten Zementschlämme wird gemäß API spec 10 beurteilt. Es ergeben sich z.B. mit den Polymerisaten gemäß den Beispielen 4 und 5 Zementschlämme mit vorteilhaft niedriger plastischer Viskosität, geringem Wasserverlust und anforderungsgemäß regulierbarer Abbindezeit in einem Temperaturbereich von 60- 200°C. Die nachfolgende Tabelle 3 zeigt die vorteilhaften Eigenschaften der erfindungsgemäßen Copolymerisate 1 und 4 gegenüber denen des bisherigen Standes der Technik (Vergleichsbeispiel 16).

Tabelle 3

| Zement Klasse | | G | | | G | | | H | | |
|---|---|---|---|---|---|---|---|---|---|---|
| Slurry - Dichte | ppg<br>Kg/l | 15,4<br>1,85 | | | 16,2<br>1,94 | | | 15,8<br>1,89 | | |
| Anmischwasser | | Süßwasser | | | 18% NaCL-Wasser | | | Süßwasser | | |
| PNS - Dispergator | % bwoc | 0,2 | | | 0,4 | | | 0,5 | | |
| HT - Verzögerer | % bwoc | 0 | | | 0 | | | 1,5 | | |
| Silica | % bwoc | 0 | | | 0 | | | 35 | | |
| Temperatur | °C<br>°F | 27<br>80 | | | 38<br>100 | | | 177<br>350 | | |
| Beispiel 1 (erf.) | % bwoc | 0,3 | | | 0,35 | | | 1,0 | | |
| Beispiel 4 (erf.) | % bwoc | | 0,3 | | | 0,35 | | | 1,0 | |
| Beispiel 16 (Vergl.) | % bwoc | | | 0,3 | | | 0,35 | | | 1.0 |
| plastische Viskosität | cP | 80 | 77 | 98 | 102 | 94 | 148 | 105* | 95* | 140* |
| Fließgrenze | lb/100ft$^2$ | 1,5 | 1,2 | 2,0 | 5 | 4,1 | 7,2 | 7,9* | 7,5* | 11* |
| Wasserverlust | ml/30min | 45 | 42 | 70 | 105 | 120 | 140 | 55 | 45 | 98 |
| *: Rheologie gemessen bei 93°C / 200 °F<br>ppg : pounds per gallon; bwoc : bezogen auf das Gewicht des Zements | | | | | | | | | | |

Die nachfolgenden Untersuchungen belegen die Wirksamkeit der wasserlöslichen Copolymere auf den Fließwiderstand von Salzwasser und Gas in einem porösen Medium. Bei dem verwendeten Gas handelt es sich um Stickstoff, der als Ersatz für Erdgas dient. Als poröse Medien werden Vogesen-Sandstein mit einer Durchlässigkeit K = 53 mD ($53 \cdot 10^{-15}$ m$^2$) und Oberkirchner Sandstein mit einer Durchlässigkeit K = 5,4 mD ($5{,}4 \cdot 10^{-15}$ m$^2$) verwendet. Als "Lagerstättenwasser" und gleichzeitig als Lösungsmittel für die Copolymeren dient eine wäßrige Lösung mit einem Salzgehalt von 97,5 g NaCl und 2,5 g $CaCl_2$ pro 100 g Wasser. Als Copolymerisate werden das erfindungsgemäße Beispiel 11 und zum Vergleich das den bisherigen Stand der Technik darstellende Beispiel 15 eingesetzt.

Die Untersuchungen gliedern sich in folgende Teilschritte:

- Messung der Durchlässigkeit für Stickstoff des wasserfreien Gesteinskerns $k_1$;
- Aufsättigung des porösen Mediums mit "Lagerstättenwasser" (= Porenwasser); Bestimmung des Druckgradienten $\frac{\Delta p_1}{l}$ für den Fluß von Wasser mit konstanter Rate $q_1$;
- Aufsättigung des porösen Mediums mit einer wäßrigen Copolymerlösung;
- Verdrängung der überschüssigen Copolymerlösung durch "Lagerstättenwasser", bis ein Gleichgewicht zwischen diesem Porenwasser und dem adsorbierenden Copolymer besteht. Messung des Druckgradienten $\frac{\Delta p_2}{l}$ für Wasser bei Fließrate $q_1$ in Gegenwart des adsorbierten Polymers;

- Verdrängen des Wassers mit Stickstoff und Messung der Durchlässigkeit für Stickstoff in Gegenwart des adsorbierten Polymers $k_2$.

Im Anschluß an diese vorbereiteten Arbeitsgänge, die dem Fachmann in der Ausführung geläufig sind und deswegen nicht näher erläutert werden müssen, erfolgt die Bestimmung des residuellen Fließwiderstandes für das "Lagerstättenwasser" und den Stickstoff.

$$RRF_W = \frac{\Delta p_2}{\Delta p_1} \qquad RRF_G = \frac{k_1}{k_2}$$

Es bedeuten:

k: Durchlässigkeit des Gesteins, abhängig von der Porengröße, [Darcy] 1 $\mu m^2$ = 1 Darcy
RRF: residueller Widerstandsfaktor (Residual Resistance Factor)
$RRF_W$: Widerstandsfaktor des Lagerstättenwassers
$RRF_G$: Widerstandsfaktor des Gases (Stickstoff)
l: Länge des Gesteinskerns [m]
p: Druckabfall über dem Kern [Pa]
q: Fließrate des Wassers [$m^3s^{-1}$]

Figuren 1 und 2 zeigen die Adsorptionswirkung des erfindungsgemäßen Copolymerisats gemäß Beispiel 11 und den daherrührenden residuellen Widerstandsfaktor für Wasser und Stickstoff an Vogesen-Sandstein (Fig. 1) und Oberkirchner Sandstein (Fig. 2). Während der RRF-Wert für Gas bis zu einer Polymerkonzentration von 750 mg/l annähernd konstant bleibt, steigt dieser für Wasser auf den 6-fachen Wert (Fig. 1). Figur 2 zeigt die resultierenden Ergebnisse in Oberkirchner Sandstein. Im Vergleich zu dem Vogesen-Sandstein verringert sich die kritische Polymerkonzentration von 750 mg/l auf 250 mg/l, was auf die geringere Permeabilität des Sandsteins zurückzuführen ist.

Figuren 3 und 4 zeigen die ermittelten Ergebnisse für das Vergleichsbeispiel 15 in Vogesen- und Oberkirchner Sandstein. Es hat sich gezeigt, daß zur Erreichung der gleichen Adsorptionswirkung eine höhere Polymerkonzentration erforderlich ist.

Bei Komplettierungs- und Aufwältigungsflüssigkeiten ergibt sich z. B. mit dem Polymerisat gemäß Beispiel 9 in einer Salzlösung der Dichte 1,80 g/$cm^3$ auf Basis 19,2 Gew.-% $CaBr_2$ und 15,2 Gew.-% $CaCl_2$ bei Prüfung gemäß API Code 29 bei einer Einsatzmenge von 60 g/l bei 20°C einen Wasserverlust von 24 $cm^3$, nach 17 h Alterung bei 100°C bzw. 15 h Alterung bei 150°C Wasserverluste von 10 bzw. 11,5 $cm^3$.

## Patentansprüche

**1.** Mischpolymere, enthaltend

A) 5 bis 95 Gew.-% Struktureinheiten, die sich von Verbindungen der Formel 1 ableiten,

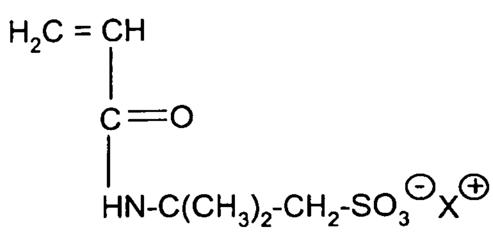

(1)

B) 1 bis 40 Gew.-% Struktureinheiten, die sich von Verbindungen der Formel 2 ableiten,

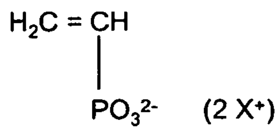

(2)

und

C1) 1 bis 50 Gew.-% Struktureinheiten, die sich von Verbindungen der Formel 3 ableiten,

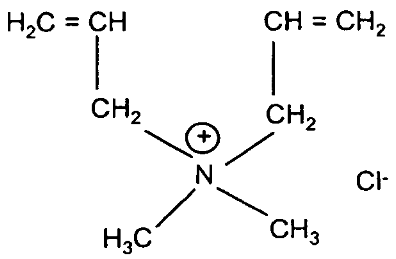

(3)

enthalten, worin X für ein Kation steht.

2. Mischpolymere nach Anspruch 1, **gekennzeichnet durch** einen Gehalt von mindestens 2 Gew.-% an Struktureinheiten abgeleitet von Verbindungen der Formel (5)

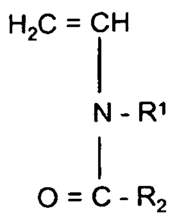

(5)

worin $R^1$ und $R^2$ unabhängig voneinander Wasserstoff, $C_1$-$C_4$-Alkyl oder $-(CH_2)-$ mit n = 3, 4 oder 5 bedeuten, wobei im letzteren Fall $R^1$ und $R^2$ einen Ring bilden.

3. Mischpolymere nach Anspruch 1 und/oder 2, **gekennzeichnet durch** einen Gehalt von 1 bis 80 Gew.-% an Struktureinheiten, die sich von Acrylamid, Acrylsäure oder beidem ableiten.

4. Verwendung von Mischpolymeren nach einem oder mehreren der Ansprüche 1 bis 3 zur Verminderung des Wasserverlustes von Bohrlochzementierungen.

5. Verwendung von Mischpolymeren nach einem oder mehreren der Ansprüche 1 bis 3 zur Verminderung des Wasserverlustes in Bohrspülungen.

6. Verwendung von Mischpolymeren nach einem oder mehreren der Ansprüche 1 bis 3 zur Verminderung der Permeabilität des Wassers in Erdöl, Erdgas und Wasser führenden Horizonten im sondennahen Bereich.

7. Verwendung von Mischpolymeren nach einem oder mehreren der Ansprüche 1 bis 3 zur Verminderung des Wasserverlustes in Komplettierungs- und Aufwältigungsflüssigkeiten.

## Claims

**1.** A copolymer comprising

A) 5 to 95% by weight of structural units which are derived from compounds of the formula 1

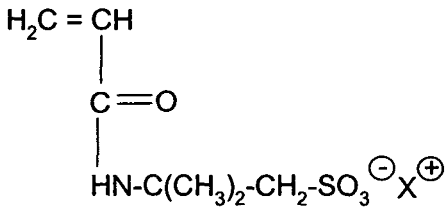

(1)

B) from 1 to 40% by weight of structural units which are derived from compounds of the formula 2

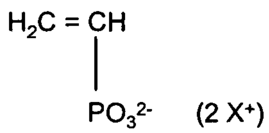

(2)

and
C1) from 1 to 50% by weight of structural units which are derived from compounds of the formula 3

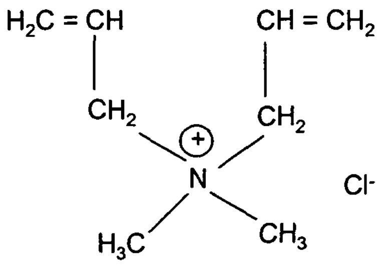

(3)

in which X is a cation.

**2.** The copolymer as claimed in claim 1, comprising at least 2% by weight of structural units derived from compounds of the formula (5)

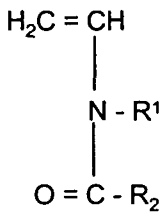

(5)

in which R and $R^2$, independently of one another, are hydrogen, $C_1$-$C_4$-alkyl or -($CH_2$)- and n is 3, 4 or 5, in the latter case $R^1$ and $R^2$ forming a ring.

3. The copolymer as claimed in claim 1 and/or 2, comprising from 1 to 80% by weight of structural units which are derived from acrylamide, acrylic acid or both.

4. The use of a copolymer as claimed in one or more of claims 1 to 3 for reducing the water loss of borehole cements.

5. The use of a copolymer as claimed in one or more of claims 1 to 3 for reducing the water loss of drilling muds.

6. The use of a copolymer as claimed in one or more of claims 1 to 3 for reducing the water permeability in petroleum-, natural gas- and water-conveying horizons in the area close to the probe.

7. The use of a copolymer as claimed in one or more of claims 1 to 3 for reducing the water loss in completion and clearing-out liquids.

**Revendications**

1. Copolymères, comprenant

A) des unités structurelles de 5 à 95 % en poids, qui sont dérivées des composés de la formule 1,

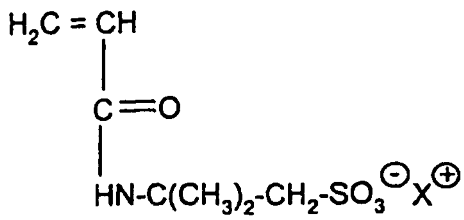

(1)

B) des unités structurelles de 1 à 40 % en poids, qui sont dérivées des composés de la formule 2,

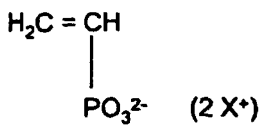

(2)

et
C1) des unités structurelles de 1 à 50 % en poids, qui sont dérivées des composés de la formule 3,

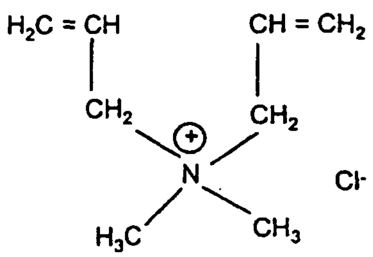

(3)

dans lesquelles X représente un cation.

2. Copolymères selon la revendication 1, **caractérisés par** une teneur d'au moins 2 % en poids d'unités structurelles

dérivées des composés de la formule (5)

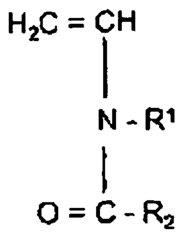

(5)

dans laquelle $R^1$ et $R^2$ représentent, indépendamment les uns des autres, un hydrogène, un alkyle en $C_1$-$C_4$ ou un $(CH_2)$- avec n = 3, 4 ou 5, dans le dernier cas $R^1$ et $R^2$ formant un composé cyclique.

**3.** Copolymères selon la revendication 1 et/ou 2, **caractérisés par** une teneur de 1 à 80 % en poids d'unités structurelles, qui sont dérivées d'acrylamide, d'acide acrylique ou des deux.

**4.** Utilisation de copolymères selon une ou plusieurs des revendications 1 à 3, pour réduire les pertes d'eau de cimentages de trou de forage.

**5.** Utilisation de copolymères selon une ou plusieurs des revendications 1 à 3, pour réduire les pertes d'eau dans les liquides de forage.

**6.** Utilisation de copolymères selon une ou plusieurs des revendications 1 à 3, pour réduire la perméabilité de l'eau dans les couches de sol parcourues par le pétrole, le gaz naturel et l'eau dans la région à proximité du puits.

**7.** Utilisation de copolymères selon une ou plusieurs des revendications 1 à 3, pour réduire les pertes d'eau dans les fluides de complétion et de remise en état.

Fig. 1
Beispiel 11 / Vogesen Sandstein

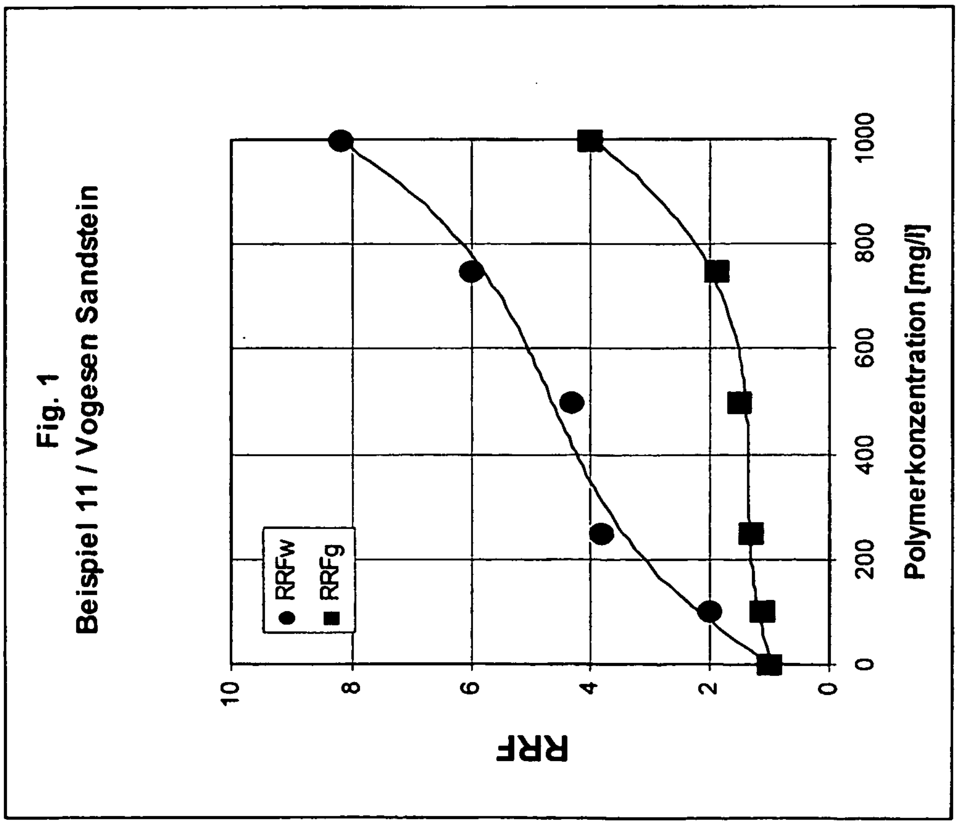


Fig. 2
Beispiel 11 / Oberkirchner Sandstein

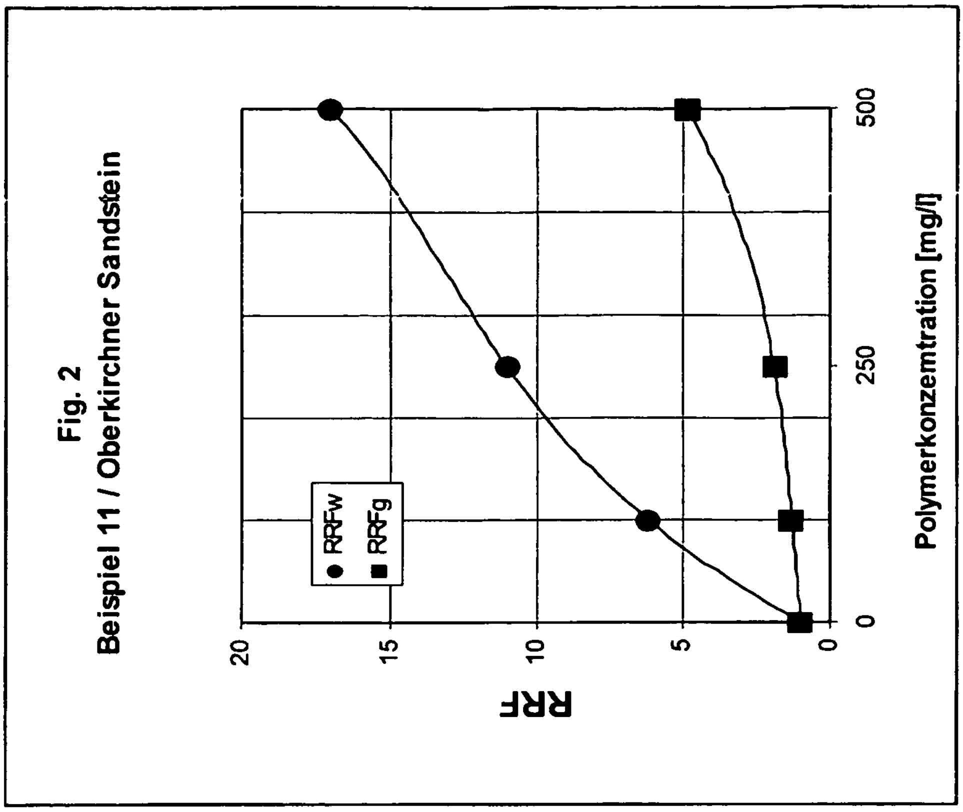

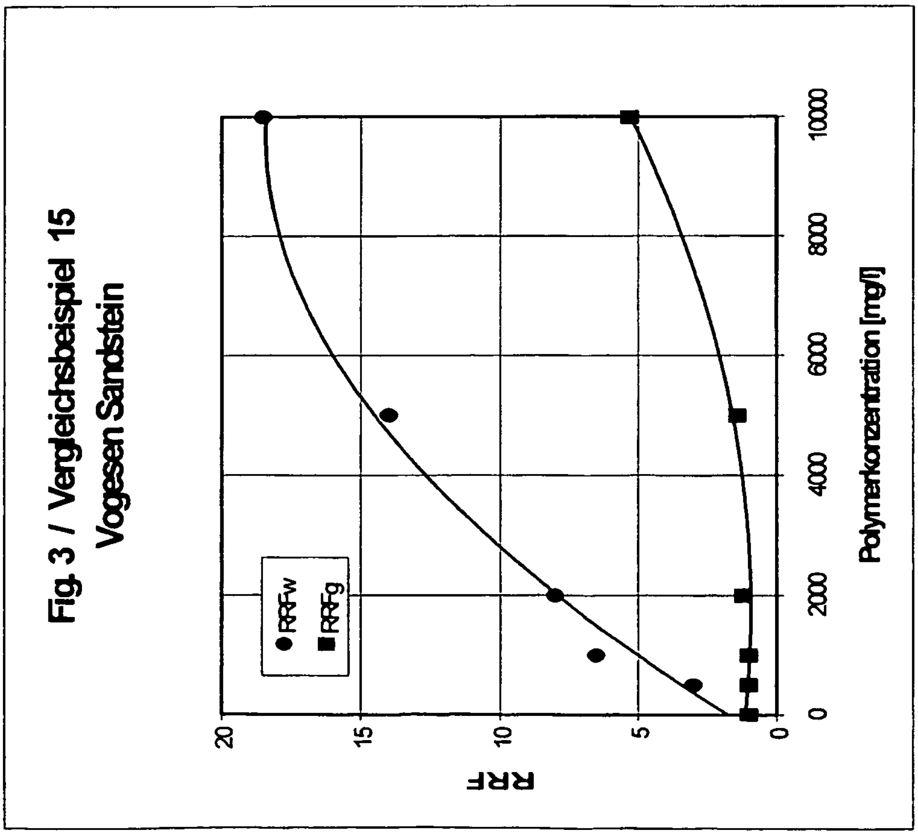


Fig. 3 / Vergleichsbeispiel 15
Vogesen Sandstein

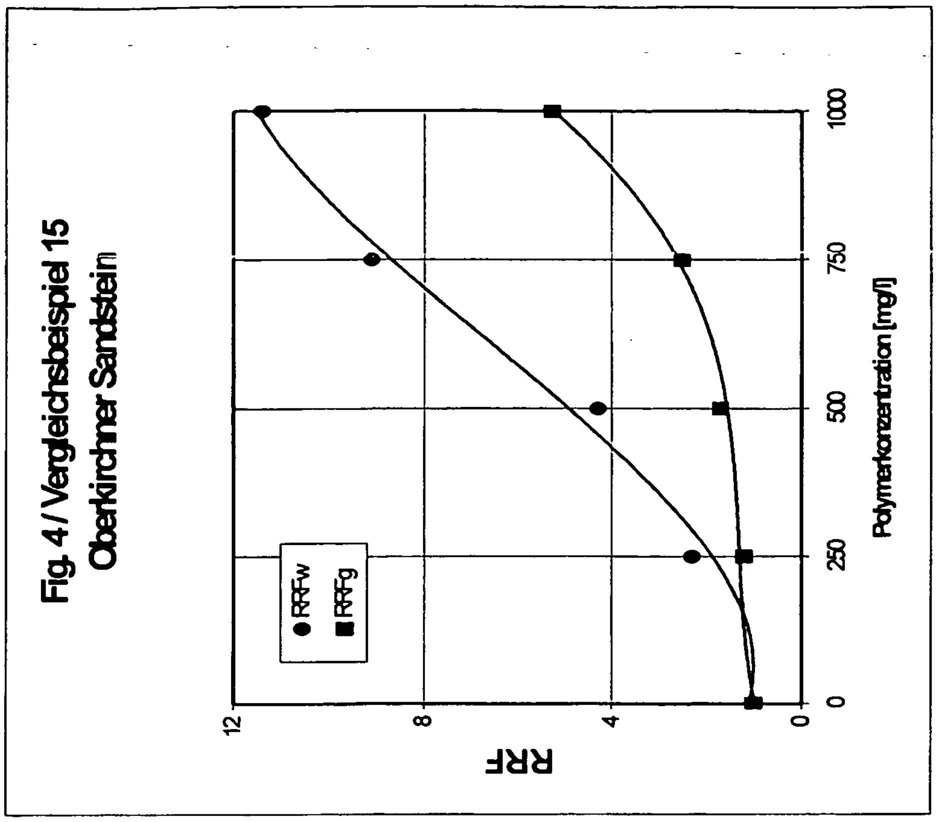


Fig. 4 / Vergleichsbeispiel 15
Oberkirchner Sandstein